# EUROPÄISCHE PATENTSCHRIFT

(11) **EP 0 844 459 B1**
(45) Veröffentlichungstag und Bekanntmachung des Hinweises auf die Patenterteilung: **16.04.2003**
(21) Anmeldenummer: 97117774.6
(22) Anmeldetag: 14.10.1997
(51) Int. Cl.: G01B 7/02, G01B 7/30, G01B 7/00

(54) **Passiver magnetischer positionssenor**
Passive magnetic position sensor
Capteur magnétique de position du type passif

(30) Priorität: 25.11.1996 DE 19648539
(43) Veröffentlichungstag der Anmeldung: 27.05.1998
(73) Patentinhaber: Siemens Aktiengesellschaft, 80333 München (DE)
(72) Erfinder: Wallrafen, Werner, 65719 Hofheim (DE)

(56) Entgegenhaltungen:
- EP-A- 0 602 538
- DE-A- 3 527 004
- DE-A- 4 309 442
- DE-A- 4 335 004
- US-A- 4 903 002
- US-A- 5 074 053

## Beschreibung

Die Erfindung betrifft einen passiven magnetischen Positionssensor gemäß dem Oberbegriff des Patentanspruchs 1.

Ein solcher Positionsgeber ist aus der DE 43 09 442 C2 bekannt. Das Widerstandsnetzwerk und die Kontaktstruktur sind dabei auf einem Substrat angeordnet. Eine elektrische Verbindung zwischen Widerstandsnetzwerk und Kontaktstruktur, an welcher das der Position des bewegten Objektes entsprechende Ausgangssignal abgenommen wird, erfolgt über ein zweites leitfähiges Substrat. Durch eine Magneteinrichtung, die mit dem beweglichen Objekt verbunden ist, dessen Position ermittelt wird, wird entweder das eine oder das andere Substrat derart ausgelenkt, dass beide sich berühren und eine elektrische Verbindung zwischen Widerstandsnetzwerk und Kontaktstruktur entsteht.

Auf Grund der wechselseitigen Anordnung von Widerstandsnetzwerk und Kontaktstruktur ist die Auflösung des Positionssensors begrenzt. Da zu Herstellung der elektrischen Verbindung zwei Kontaktübergangsstellen vorhanden sind, arbeitet ein solches Kontaktsystem nicht immer zuverlässig.

Ein gattungsgemäßer Positionssensor ist aus der US-PS 5,074,053 bekannt, bei welchem ein Kontakt einer Kontaktfederstruktur mit einer Widerstandsbahn erfolgt, wobei die Widerstandsbahn direkt mit der Kontaktfederstruktur kontaktiert ist. Dies führt jedoch auf Grund wechselnder Übergangswiderstände zu ungenauen Ausgangssignalen.

Der Erfindung liegt somit die Aufgabe zugrunde, einen Positionsgeber anzugeben, welcher zuverlässig und verschleißarm arbeitet, eine hohe Auflösung aufweist sowie konstruktiv einfach zu realisieren ist.

Erfindungsgemäß wird die Aufgabe durch die Merkmale des Patentanspruchs 1 gelöst.

Der Vorteil der Erfindung besteht darin, dass der Positionssensor eine höhere Kontaktzuverlässigkeit und gleichzeitig eine höhere Auflösung aufweist, da Widerstandsnetzwerk und Kontaktfederstruktur sich direkt berühren. Die Kontaktfederstruktur kann dabei jede Struktur sein, die auf irgendeine Art und Weise zungenartige Federelemente aufweist, egal, ob diese Federelemente einzeln aufgesetzt werden oder im Verbund von mehreren Federelementen als einstückige Struktur ausgebildet sind. Die Verbesserung der Kontaktfähigkeit erfolgt auch durch die auf dem Substrat aufgebrachten Kontaktflächen, wodurch ein erschütterungsfreier und robuster Aufbau des Positionssensors mit nur geringen Abmessungen möglich ist, was besonders für den Einsatz in Kraftfahrzeugen vorteilhaft ist. Er ist sowohl als 2-poliger Stellwiderstand als auch als 3-poliges Potentiometer vielseitig einsetzbar.

Das Widerstandsnetzwerk ist entweder als schichtförmige Widerstandsbahn in Dünnschicht- oder Dickschichttechnik bzw. durch separate Widerstände aus dotiertem Halbleitermaterial wie Silizium oder Germanium, durch separat montierte Festwiderstände oder separate Schichtwiderstände realisiert. Zur Erhöhung der Genauigkeit kann das Widerstandsnetzwerk getrimmt werden.

Vorteilhafterweise sind die Kontaktflächen durch Leiterbahnen gebildet, die ganz oder teilweise auf dem Widerstandsnetzwerk angeordnet sind.

Alternativ dazu können die Leiterbahnen in vorgegebenen Abständen direkt auf dem Substrat angeordnet sein, welche teilweise mit dem Widerstandsnetzwerk bedeckt sind, wobei der unbedeckte Teil jeder Leiterbahn die Kontaktfläche bildet.

Insbesondere bei der Realisierung des Widerstandsnetzwerkes als schichtförmige Widerstandsbahn erlauben die Leiterbahnen einen genauen Abgriff des Ausgangssignals.

Zur weiteren Verbesserung der Zuverlässigkeit des Kontaktwiderstandes sind die Kontaktflächen auf dem Substrat und auf den Kontaktfedern mit einer Edelmetallschicht versehen.

Die Leiterbahnen sind dabei niederohmiger als die Einzelwiderstände des Widerstandsnetzwerkes ausgebildet.

Das nicht leitende Substrat besteht dabei entweder aus einer Keramik-, Glas- oder Kunststoffplatte. Es sind aber auch andere Materialien wie Silizium und Epoxid-Leiterplattenmaterial denkbar. Auch ein elektrisch isoliertes Metallsubstrat ist einsetzbar.

Vorteilhafterweise wird das Gehäuse aus dem isolierenden Substrat als Gehäusewandung gebildet, welches mit einer Gehäuseabdeckung verschlossen ist.

Alternativ können das Substrat und die Kontaktfederstruktur in einem Kunststoffgehäuse dicht umspritzt sein.

Weitere Ausgestaltungen sind in den abhängigen Ansprüchen gekennzeichnet.

Die Erfindung läßt zahlreiche Ausführungsformen zu, wobei eine in der Zeichnung anhand der Figuren näher erläutert werden soll.

Es zeigt:
- Fig. 1:: ein erstes Ausführungsbeispiel des erfindungsgemäßen Positionssensors als Potentiometer
- Fig. 2:: Widerstandsbahn mit Leiterbahnen in Draufsicht
- Fig. 3:: Widerstandsbahn mit Leiterbahnen im Schnitt
- Fig. 4:: Anordnung der Magneteinrichtung am beweglichen Objekt
- Fig. 5:: Ausgangssignal des erfindungsgemäßen Positionssensors
- Fig. 6:: erfindungsgemäßer Positionssensor mit einzelnen Biegebalkenelementen
- Fig. 7:: erfindungsgemäßer Positionssensor als Stellwiderstand
- Fig. 8:: Widerstandsnetzwerk in Form von separaten Widerständen
- Fig. 9:: Kontaktierung der elektrischen Anschlüsse
- Fig. 10:: elektrisches Ersatzschaltbild des Positionssensors

Gleiche Merkmale sind in allen Figuren mit den gleichen Bezugszeichen gekennzeichnet.

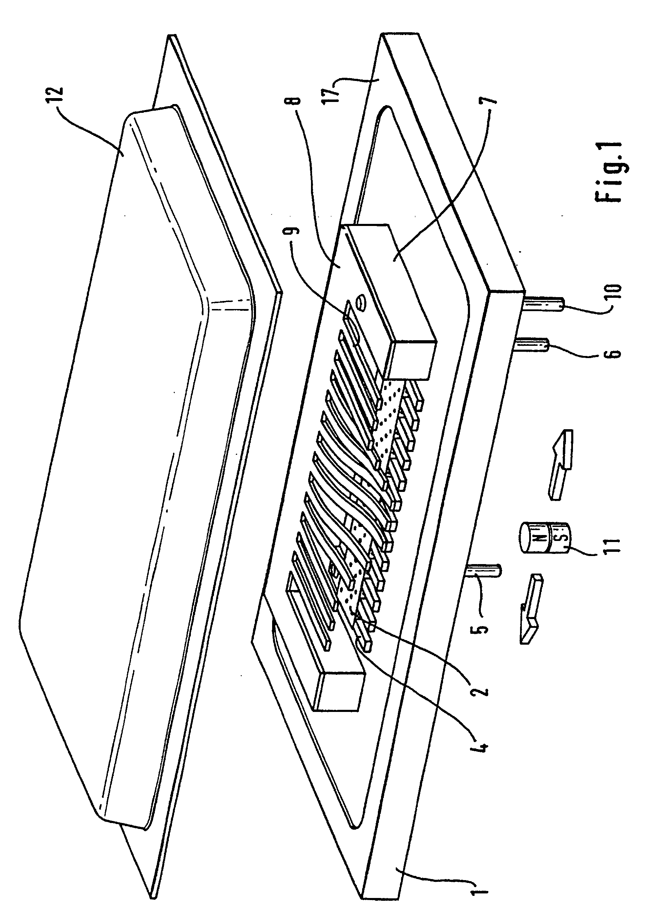

In Figur 1 ist schematisch der Aufbau eines linearen passiven magnetischen Positionssensors auf der Basis einer Dickschichtanordnung in Form eines Potentiometers dargestellt.

Das unmagnetische Substrat 1 trägt ein Widerstandsnetzwerk in Form einer schichtförmigen Widerstandsbahn 2, welche sich zwischen den elektrischen Anschlüssen 5 und 6 erstreckt.

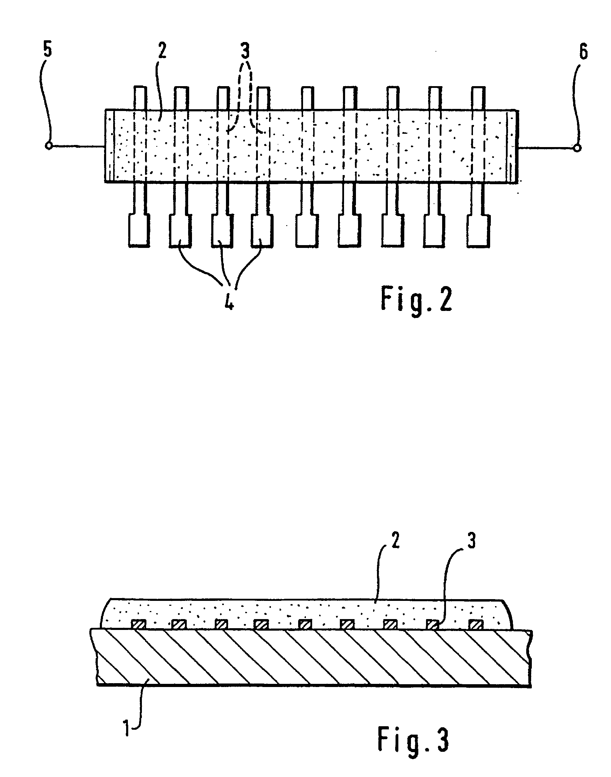

Wie aus Figur 2 ersichtlich, sind unter der Widerstandsbahn 2 in gleichmäßigen Abständen auf dem Substrat parallel zueinander mehrere Leiterbahnen 3 angeordnet. Diese Leiterbahnen 3 sind senkrecht zur Widerstandsbahn 2 direkt auf dem Substrat aufgebracht. Die Leiterbahnen 3 werden teilweise von der Widerstandsbahn 2 abgedeckt. Dabei bildet das Ende jeder Leiterbahn 3 eine Kontaktfläche 4, die mit Gold oder Silber beschichtet ist.

Die Schnittdarstellung in Figur 3 zeigt, daß die Leiterbahnen 3 im Bereich der Widerstandsbahn 2 vollständig von dieser umschlossen sind, um eine zuverlässige elektrische Kontaktierung zu gewährleisten. Gemäß Figur 1 ist auf dem Substrat 1 parallel zur Widerstandsbahn 2 ein Abstandshalter 7 angeordnet, auf welchem eine einstückige, kammförmige Biegebalkenstruktur 8 in Form einer weichmagnetischen Folie aufgebracht ist.

Alternativ dazu besteht die Biegebalkenstruktur 8 aus nicht magnetischem Material, welches mit einer magnetischen Schicht versehen ist.

Die kammförmige weichmagnetische Biegebalkenstruktur 8 besteht aus einseitig gestützten, frei beweglichen Biegebalken 9. Die Biegebalken 9 sind zur Reduzierung des Kontaktwiderstandes galvanisch mit einer Gold- oder Silberschicht beschichtet.

Der Abstandshalter 7 hält die frei beweglichen Enden der Biegebalkenstruktur 8 in einem definierten Abstand zu den Kontaktflächen 4.

Die frei beweglichen Enden der Biegebalken 9 sind überdeckend zu den Kontaktflächen 4 angeordnet. Dabei ist die als weichmagnetische Folie ausgebildete Biegebalkenstruktur 8 selbst elektrisch leitfähig und steht mit dem außenliegenden elektrischen Anschluß 10 in Verbindung.

Die Widerstandsbahn 2 ist, wie bereits erläutert, über die Anschlüsse 5 und 6 elektrisch mit Masse und der Betriebsspannung U_{B} verbunden. Die Signalspannung U_{AUS} des Positionsgebers ist über den elektrischen Anschluß 10 abgreifbar, der mit der Biegebalkenstruktur 8 verbunden ist. Die Signalspannung U_{AUS} ist im Bereich von 0 V bis U_{B} variierbar und stellt die Position eines Permanentmagneten 11 dar.

Der Permanentmagnet 11, welcher außerhalb des Gehäuses 1, 12 beweglich gegenüber der abgewandten Seite des die Widerstandsbahn 2 tragenden Substrats 1 angeordnet ist, wird im Bereich der Überlagerung der Kontaktflächen 4 mit den frei beweglichen Enden der einseitig gestützten Biegebalken 9 bewegt. Der Permanentmagnet 11 kann dabei mittels einer Feder derart vorgespannt sein, daß er entlang der Gehäuseaußenseite, z. B. der Substrataußenseite, berührend bewegbar ist.

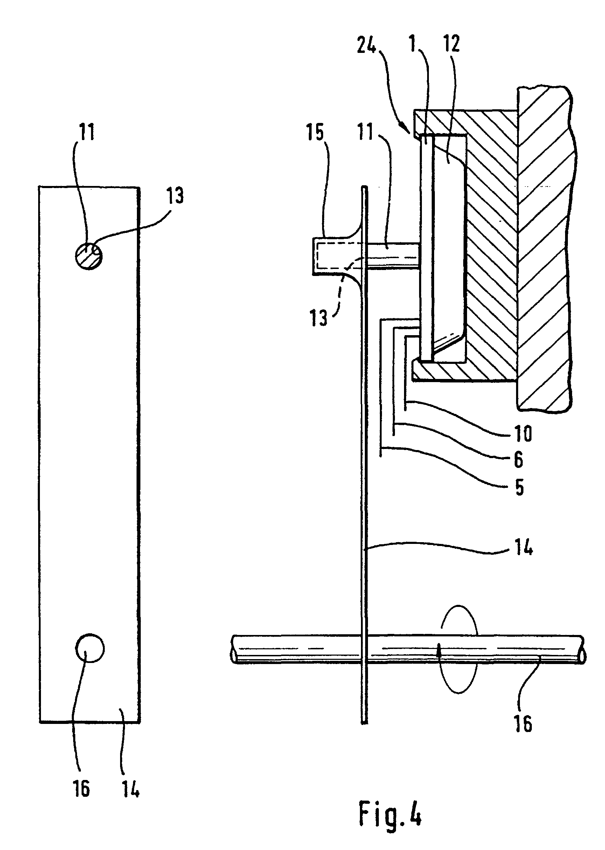

Der Aufbau ist in Figur 4 in Drauf- und Seitenansicht dargestellt.

Der Positionssensor, welcher am Einbauort mittels einer Klipseinrichtung 24 befestigt ist, ist nur mit Hilfe des Substrats 1 und der Gehäuseabdeckung 12 sowie den elektrischen Anschlüssen 5, 6, 10 dargestellt. Der Dauermagnet 11 ist in der Öffnung 13 einer Blattfeder 14 kraftschlüssig in einer Hülse 15 angeordnet. Die Blattfeder 14 umschließt an dem der Magnetbefestigung entgegengesetzten Ende eine Drehachse 16, die mit dem beweglichen Objekt verbunden ist. Es ist auch eine lineare Positionsmessung durch geradlinige Verschiebung der Blattfeder 14 möglich.

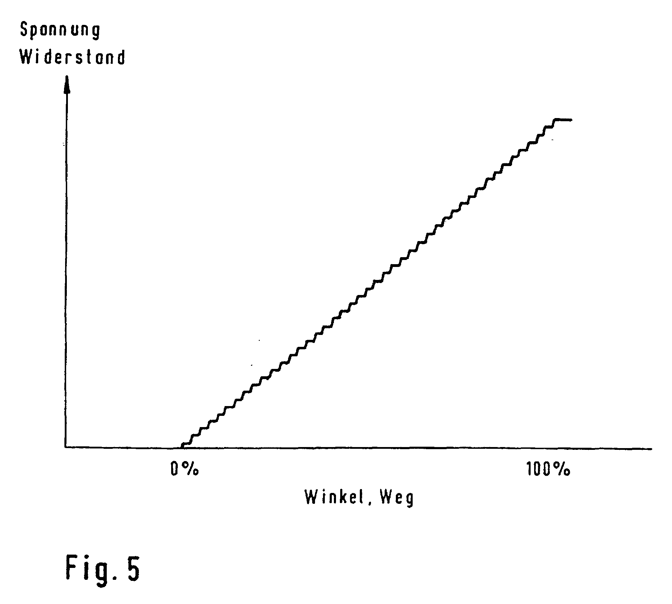

Die frei beweglichen Enden der Biegebalken 9 der Biegebalkenstruktur 8 werden durch das Magnetfeld des Permanentmagneten 11 auf die Kontaktflächen 4 gezogen und kontaktiert. Entsprechend der Position des Permanentmagneten 11 wird eine elektrische Verbindung zu den dazugehörigen Widerständen des Widerstandsnetzwerkes erzeugt und eine dieser Position entsprechende Signalspannung U_{AUS} abgegriffen. Es wird dabei ein gestuftes Ausgangssignal erzeugt, wie es in Figur 5 dargestellt ist.

Die Breite des Dauermagneten 11 ist so dimensioniert, daß mehrere nebeneinander liegende, frei bewegliche Enden 9 der Biegebalkenstruktur 8 gleichzeitig mit den entsprechenden Kontaktflächen 4 kontaktiert werden und somit redundant wirken, so daß etwaige Kontaktunterbrechungen nicht zum völligen Signalausfall des Meßsystems führen.

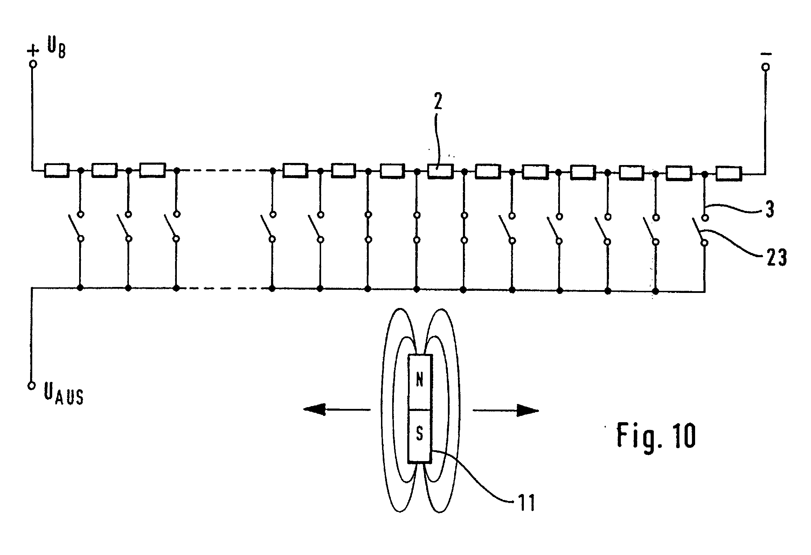

Dies ist im elektrischen Ersatzschaltbild des Positionssensors gemäß Figur 10 noch einmal verdeutlicht.

Die Einzelwiderstände des Widerstandsnetzwerkes 2 können, wie beschrieben, als Bahn oder als separate Einzelwiderstände ausgebildet sein.

Die Berührung der Biegebalkenelemente 9 mit den Kontaktflächen 4 an den Leiterbahnen 3 führt zum Schließen eines Schalters 23, wodurch das Ausgangssignal U_{AUS} erzeugt wird.

Der Abstandshalter 7 ist mittels einer temperaturbeständigen und ausgasungsfreien selbstklebenden Folie sowohl an der Biegebalkenstruktur 8 als auch am isolierenden Substrat 1 befestigt. Zur Herstellung einer direkten elektrischen Verbindung kann der Abstandshalter 7 metallisch ausgebildet sein.

Der Abstandshalter 7 kann vorzugsweise auch aus dem gleichen Material wie das Substrat 1 hergestellt sein.

Auch kann eine quer gebogende Biegebalkenstruktur 8 zur Abstandsgewinnung der Biegebalken 9 zu den Kontaktflächen 4 genutzt werden.

Das die Widerstandsbahn 2 und die weichmagnetische Folie 8 tragende isolierende Substrat 1 besteht aus einer Keramikplatte. Es ist aber auch der Einsatz von Glas- oder Kunststoffträgern oder Glas- oder isolationsbeschichteten Metallplatten, sowie Silizium oder Epoxid-Leiterplattenmaterial denkbar.

Das isolierende Substrat 1, welches die Widerstandsbahn 2, die Leiterbahnen 3 mit den Kontaktflächen 4, den Abstandshalter 7 sowie die Biegebalkenstruktur 8 trägt, dient gleichzeitig als Gehäusewandung des Positionssensors, die mit einer Gehäuseabdeckung 12 verschlossen wird.

In einer Ausgestaltung sind der Abstandshalter 7 und die Biegebalkenstruktur 8 mit der Gehäuseabdeckung 12 gegen das isolierende Substrat 1 gepreßt und somit zusätzlich in ihrer Lage fixiert.

Das Material der Gehäuseabdeckung 12 und des Substrats 1 weisen dabei den gleichen bzw. einen ähnlichen Temperaturausdehnungskoeffizienten auf und können verlötet, verschweißt oder verklebt werden.

Bei der Verwendung einer metallischen Gehäuseabdeckung 12 kann die Abdeckung zum Korrosionsschutz und zur Verbesserung der Lötbarkeit vollständig verzinnt werden.

Anstelle der metallische Gehäuseabdeckung 12 ist auch eine lötfähige metallisierte Keramikabdeckung verwendbar.

Eine weitere Möglichkeit besteht darin, den Gehäusedeckel 12 mit dem Substrat 1 mit Kleber oder einer Schmelzfolie zu verkleben.

Eine metallisierte Schicht 17 als umlaufender Rand auf dem isolierenden Substrat 1 dient zur Verkapselung des Positionssensors. Zur Verbesserung der Lötbarkeit wird die Metallschicht 17 verzinnt.

Zur Realisierung der elektrischen Anschlüsse 5, 6, 10 werden Stifte durch das isolierende Substrat 1 geführt und dort hermetisch dicht und damit korrosionsbeständig mit der Widerstandsbahn 2 bzw. der Biegebalkenstruktur 8 verlötet oder verschweißt.

Alternativ können aber auch Verbindungsdrähte 21 über je eine dichte Glasdurchführung nach außen geführt werden, wobei jede Glasdurchführung entweder durch das Substrat 1 oder durch die Gehäuseabdeckung 12 geführt wird.

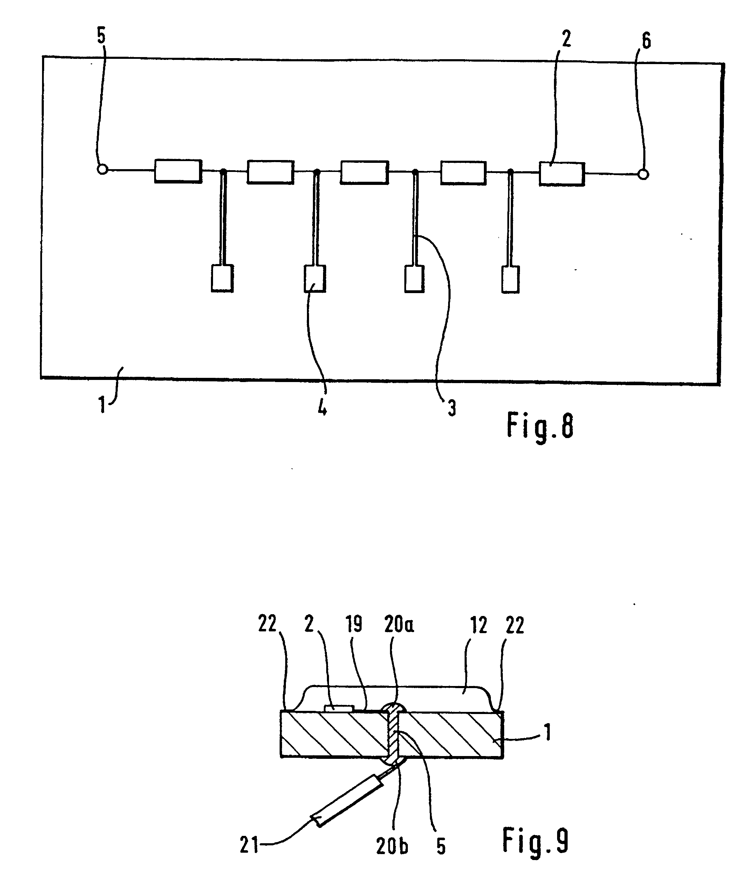

In einer weiteren Ausführung, wie sie in Figur 9 dargestellt ist, können die Durchführungslöcher für die elektrischen Anschlüsse, z. B. Anschluß 5 im Substrat 1 (oder der Gehäuseabdeckung 12), durch Zulöten mittels Auffüllen des Durchführungsloches mit Lötmittel (20) ohne Verbindungsdrähte abgedichtet werden. Der entstehende Lötpunkt 20b dient gleichzeitig als elektrischerAnschluß für von außen zugeführte Drähte 21. Dadurch wird zuverlässig verhindert, daß Feuchtigkeit durch die Durchführungslöcher in den Positonssensor eindringt. Das Widerstandsnetzwerk 2 ist über eine auf dem Substrat 1 befindliche Anschlußleiterbahn 19 mit dem Lötpunkt 20a verbunden.

Im Bereich des umlaufenden Randes 22 sind Substrat 1 und Gehäuseabdeckung 12, wie beschrieben, über die metallisierte Schicht 17 verlötet, verschweißt oder verklebt.

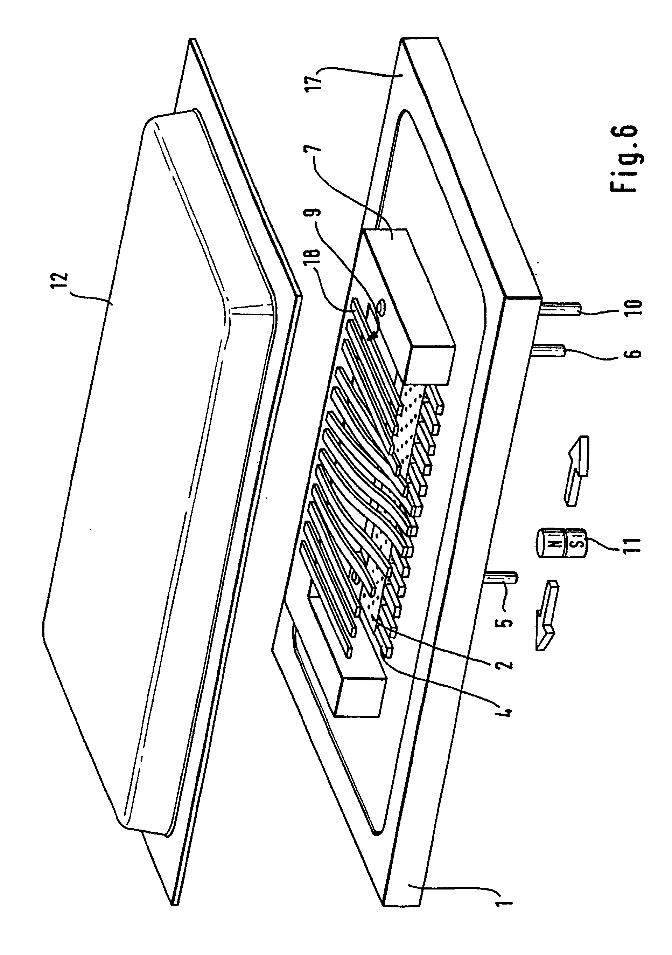

Anstelle der beschriebenen einstückigen Biegebalkenstruktur 8 können einzelne Biegebalkenelemente 18 verwendet werden (Fig. 6). Auch diese Biegebalkenelemente 18 bestehen aus einer weichmagnetischen Folie und sind elektrisch leitfähig ausgebildet. Sie werden ebenfalls mittels einer selbstklebenden Folie am Abstandshalter 7 befestigt. Die Biegebalkenelemente 18 sind so dimensioniert, daß sie durch eigene Federkraft ohne zusätzliche Hilfsmittel bei Nachlassen der Magneteinwirkung zurückstellen. Diese selbsttätige Rückstellung gilt auch für die zuvor beschriebene Biegebalkenstruktur.

Die Biegebalkenelemente 18 sind elektrisch mit dem Abgriff 10 zur Lieferung des Positionssignals U_{AUS} verbunden. Diese Biegebalkenelemente 18 können entweder aus weichmagnetischem Material oder aus einem nicht magnetischen Material bestehen, welches mit magnetischen Schichten versehen ist. Die Biegebalkenelemente sind dabei ebenfalls partiell mit einer Edelmetallschicht überzogen.

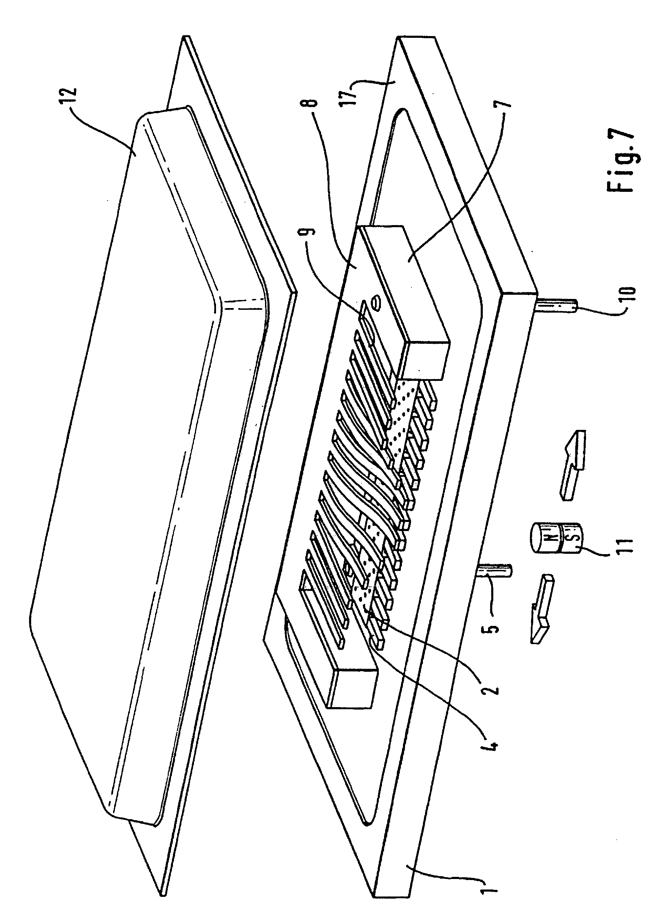

Der beschriebene Positionssensor ist aber nicht nur als Potentiometer einsetzbar, sondern auch als Stellwiderstand. Wie aus Figur 7 ersichtlich, wird die Widerstandsbahn 2 dabei mit einem Anschluß 5 und die Biegebalkenstruktur mit dem Abgriff 10 zum Abgriff eines Widerstandssignals verbunden.

Sowohl die Ausführung des magnetischen Positionssensors als Potentiometer als auch als Stellwiderstand sind, wie beschrieben, einfach in Dickschichttechnik herstellbar. Dabei beträgt die Dicke der Schicht 5 - 50 µm. Die Breite annähernd 0,2 mm und die Länge ungefähr 100 mm. Die Schichten werden in bekannter Dickschichttechnik mit Siebdruck aufgebracht und anschließend eingebrannt.

Das Widerstandsnetzwerk 2 des Positionssensors kann auf dem Substrat aber auch in Dünnschichttechnik hergestellt werden. Hier beträgt die Schichtdicke üblicherweise 0,5 bis 2 µm, die Schichtbreite wird zwischen 5 µm und 5 mm gewählt, während die Schichtlänge 1 mm bis 100 mm beträgt.

Die Leiterbahnen 3 liegen entweder zwischen Substrat 1 und Widerstandsbahn 2 oder die Widerstandsbahn 2 ist direkt auf dem Substrat 1 angeordnet und die Leiterbahnen 3 sind in der beschriebenen Konfiguration auf der Widerstandsbahn 2 angeordnet. Dies hat den Vorteil, daß die gesamte Fläche einer Leiterbahn 3 als Kontaktfläche 4 in der beschriebenen Art und Weise verwendbar ist. Es ist auch denkbar, daß Widerstandsbahn 2 und Kontaktflächen 4 in einem Layout auf das Substrat aufgebracht werden.

In einer anderen Ausgestaltung besteht das Widerstandsnetzwerk 2 aus einer Reihenschaltung von n einzelnen Widerständen 2. Jedem Widerstandsknoten ist eine Kontaktfläche 4 über eine Leiterbahn 3 zugeordnet (Fig. 8).

Die Kontaktflächen 4 und die separaten Widerstände 2 bestehen dabei aus unterschiedlichem Material, wobei der Widerstand 2 um mindestens den Faktor 10 hochohmiger ausgebildet ist, als die Leiterbahn 3.

Die Widerstände 2 selbst bestehen in diesem Fall aus dotiertem Halbleitermaterial wie Silizium oder Germanium und können mit den bekannten Halbleiter-Herstellprozessen hergestellt werden.

Zur Reduzierung der Herstellungstoleranzen können die Schicht- oder Einzelwiderstände getrimmt werden.

## Patentansprüche

1. Passiver Positionssensor, bestehend aus einem Substrat (1), mit einem auf diesem Substrat aufgebrachten Widerstandsnetzwerk (2,3,4) und einer Kontaktstruktur (8,9) die dem Widerstandsnetzwerk zugeordnet ist, und die unter Einwirkung einer Magneteinrichtung (11) auslenkbar ist, wobei eine elektrische Verbindung zwischen Widerstandsnetzwerk und Kontaktstruktur bewirkt wird, welche von der Position der Magneteinrichtung abhängig ist, und die Kontaktstruktur als Kontaktfederstruktur ausgebildet ist, welche in einem Gehäuse (1,12) eingeschlossen ist und die Magneteinrichtung außerhalb des Gehäuses bewegbar ist, wobei in Abhängigkeit von der Position der Magneteinrichtung ein gestuftes Ausgangssignal (Uₐᵤₛ) an der Kontaktfederstruktur abnehmbar ist, **dadurch gekennzeichnet, dass** die Knotenpunkte des Widerstandsnetzwerkes (2) mit ebenfalls auf dem Substrat (1) aufgebrachten Kontaktflächen (4) verbunden sind, wobei die Kontaktfederstruktur (8) in einem konstanten Abstand zu den Kontaktflächen (4) angeordnet ist, welche im Gebrauch unter Einwirkung der Magneteinrichtung (11) mit der Kontaktfederstruktur (8) in Berührung treten, und wobei mindestens die Kontaktflächen (4) und die Kontaktfederstruktur (8) in dem dichten Gehäuse (1, 12) eingeschlossen sind und das gestufte Ausgangssignal an der Kontaktfederstruktur (8) lediglich durch deren Berührung mit den Kontaktflächen (4) des Widerstandsnetzwerkes (2) abnehmbar ist.

2. Positionssensor nach Anspruch 1, **dadurch gekennzeichnet, daß** auf dem Substrat (1) in vorgegebenen Abständen Leiterbahnen (3) angeordnet sind und das Ende jeder Leiterbahn (3) die Kontaktfläche (4) bildet.

3. Positionssensor nach Anspruch 1 oder 2, **dadurch gekennzeichnet, daß** das Widerstandsnetzwerk (2) als schichtförmige Widerstandsbahn ausgebildet ist.

4. Positionssensor nach Anspruch 3, **dadurch gekennzeichnet, daß** die Widerstandsbahn (2) eine mäanderförmige Struktur aufweist.

5. Positionssensor nach Anspruch 4, **dadurch gekennzeichnet, daß** sich die Kontaktflächen (4) direkt an die mäanderförmige Struktur anschließen.

6. Positionssensor nach einem der vorhergehenden Ansprüche 3 und 4, **dadurch gekennzeichnet, daß** die Widerstandsbahn (2) in Dünnschichttechnik hergestellt ist.

7. Positionssensor nach einem der vorhergehenden Ansprüche 3 und 4, **dadurch gekennzeichnet, daß** die Widerstandsbahn (2) in Dickschichttechnik hergestellt ist.

8. Positionssensor nach einem der Ansprüche 2 bis 7, **dadurch gekennzeichnet, daß** die Leiterbahnen (3) in vorgegebenen Abständen ganz oder teilweise auf der Widerstandsbahn (2) angeordnet sind.

9. Positionssensor nach einem der Ansprüche 2 bis 7, **dadurch gekennzeichnet, daß** die Leiterbahnen (3) teilweise mit der Widerstandsbahn (2) bedeckt sind und das Ende jeder Leiterbahn (3) die Kontaktfläche (4) bildet.

10. Positionssensor nach Anspruch 1, **dadurch gekennzeichnet, daß** das Widerstandsnetzwerk (2) aus separaten Einzelwiderständen besteht.

11. Positionssensor nach Anspruch 10, **dadurch gekennzeichnet, daß** die Einzelwiderstände aus dotiertem Halbleitermaterial hergestellt sind.

12. Positionssensor nach Anspruch 10, **dadurch gekennzeichnet, daß** die Einzelwiderstände separat montierte Festwiderstände sind.

13. Positionssensor nach Anspruch 10, **dadurch gekennzeichnet, daß** die Einzelwiderstände separate Schichtwiderstände sind.

14. Positionssensor nach einem der vorhergehenden Ansprüche 1 und 9, **dadurch gekennzeichnet, daß** die Leiterbahnen (3) niederohmiger als die Einzelwiderstände des Widerstandsnetzwerkes (2) ausgebildet sind.

15. Positionssensor nach einem der vorhergehenden Ansprüche 1, 6, 7 oder 10, **dadurch gekennzeichnet, daß** das Widerstandsnetzwerk (2) zur Erhöhung der Genauigkeit getrimmt ist.

16. Positionssensor nach Anspruch 1, **dadurch gekennzeichnet, daß** die auf dem Substrat (1) angeordneten Kontaktflächen (4) eine Edelmetallschicht aufweisen.

17. Positionssensor nach einem der Ansprüche 1 oder 16, **dadurch gekennzeichnet, daß** das Substrat (1) aus Keramik, Silizium, Glas, Epoxid-Leiterplattenmaterial oder einem elektrisch isolierendem Metallsubstrat besteht.

18. Positionssensor nach Anspruch 1, **dadurch gekennzeichnet, daß** die Kontaktfederstruktur (8) aus separaten Kontaktfedern (18) besteht.

19. Positionssensor nach Anspruch 1, **dadurch gekennzeichnet, daß** die Kontaktfederstruktur (8) eine einstückige Biegebalkenstruktur ist.

20. Positionssensor nach Anspruch 18 oder 19, **dadurch gekennzeichnet, daß** die Kontaktfederstruktur (8) aus weichmagnetischem Material besteht.

21. Positionssensor nach Anspruch 18 oder 19, **dadurch gekennzeichnet, daß** die Kontaktfederstruktur (8) aus nichtmagnetischem Material besteht, welches mit mindestens einer magnetischen Schicht versehen ist.

22. Positionssensor nach Anspruch 18, 19, 20 oder 21, **dadurch gekennzeichnet, daß** die Kontaktfederstruktur (8) zumindest an ihren elektrischen Kontaktflächen mit einer Edelmetallschicht versehen ist.

23. Positionssensor nach einem der Ansprüche 18 bis 22, **dadurch gekennzeichnet, daß** mindestens zwei Kontaktfedern (9) der Kontaktfederstruktur (8) gleichzeitig durch die Magneteinrichtung (11) betätigt werden.

24. Positionssensor nach einem der vorhergehenden Ansprüche, **dadurch gekennzeichnet, daß** die Kontaktfederstruktur (8) und das Substrat (1) aus gleichem Material hergestellt sind.

25. Positionssensor nach einem der vorhergehenden Ansprüche 1, 16 oder 17, **dadurch gekennzeichnet, daß** das isolierende Substrat (1) gleichzeitig als Gehäusewandung dient, welches mit einer Gehäuseabdeckung (12) verschlossen ist.

26. Positionssensor nach Anspruch 25, **dadurch gekennzeichnet, daß** das Substrat (1) und die Gehäuseabdeckung (12) aus Material mit gleichen bzw. ähnlichen Temperaturausdehnungskoeffizienten besteht.

27. Positionssensor nach Anspruch 25 oder 26, **dadurch gekennzeichnet, daß** die Gehäuseabdeckung (12) und das Substrat (1) dicht verlötet, verschweißt oder verklebt sind.

28. Positionssensor nach Anspruch 24, **dadurch gekennzeichnet, daß** das Substrat (1) und die Kontaktfederstruktur (8) aus Halbleitermaterial besteht.

29. Positionssensor nach Anspruch 28, **dadurch gekennzeichnet, daß** das Substrat (1) und die Kontaktfederstruktur (8) in einem Kunststoffgehäuse dicht umkapselt sind.

30. Positionssensor nach Anspruch 1, **dadurch gekennzeichnet, daß** die Magneteinrichtung (11) gegen die Außenseite des Gehäuses (1, 12) vorgespannt ist, so daß sie leicht berührend bewegbar ist.

31. Positionssensor nach Anspruch 30, **dadurch gekennzeichnet, daß** die Vorspannung durch ein Federelement (14) erzeugt ist, welches gleichzeitig zur Aufnahme der Magneteinrichtung (11) dient.

32. Positionssensor nach Anspruch 1, **dadurch gekennzeichnet, daß** mindestens ein elektrischer Anschluß (5) des Widerstandsnetzwerkes (2) und ein elektrischer Anschluß (10) der Kontaktfederstruktur (8) abgedichtet nach außen geführt sind.

## Claims

1. Passive position sensor, comprising a substrate (1) having a resistance network (2, 3, 4) which is applied to this substrate and a contact structure (8, 9) which is assigned to the resistance network and which can be deflected under the action of a magnet device (11), an electrical connection between resistance network and contact structure being effected, which depends on the position of the magnet device and the contact structure being constructed as a contact spring structure which is enclosed in a housing (1, 12) and the magnet device being able to be moved outside the housing, it being possible for a stepped output signal (U_{OUT}) to be tapped off on the contact spring structure, depending on the position of the magnet device, **characterized in that** the junctions of the resistance network (2) are connected to contact surfaces (4) likewise applied to the substrate (1), the contact spring structure (8) being arranged at a constant distance from the contact surfaces (4) which, during use and under the action of the magnet device (11), come into contact with the contact spring structure (8), and at least the contact surfaces (4) and the contact spring structure (8) being enclosed in the sealed housing (1, 12), and it being possible for the stepped output signal to be tapped off on the contact spring structure (8) merely as a result of the contact between the latter and the contact surfaces (4) of the resistance network (2).

2. Position sensor according to Claim 1, **characterized in that** conductor tracks (3) are arranged at predefined intervals on the substrate (1), and the end of each conductor track (3) forms the contact surface (4).

3. Position sensor according to Claim 1 or 2, **characterized in that** the resistance network (2) is formed as a layer-like resistance track.

4. Position sensor according to Claim 3, **characterized in that** the resistance track (2) has a meandering structure.

5. Position sensor according to Claim 4, **characterized in that** the contact surfaces (4) adjoin the meandering structure directly.

6. Position sensor according to one of the preceding claims 3 and 4, **characterized in that** the resistance track (2) is produced using thin-layer technology.

7. Position sensor according to one of the preceding claims 3 and 4, **characterized in that** the resistance track (2) is produced using thick-layer technology.

8. Position sensor according to one of Claims 2 to 7, **characterized in that** the conductor tracks (3) are arranged at predefined intervals, wholly or partially on the resistance track (2).

9. Position sensor according to one of Claims 2 to 7, **characterized in that** the conductor tracks (3) are partly covered by the resistance track (2), and the end of each conductor track (3) forms the contact surface (4).

10. Position sensor according to Claim 1, **characterized in that** the resistance network (2) comprises separate individual resistors.

11. Position sensor according to Claim 10, **characterized in that** the individual resistors are produced from doped semiconductor material.

12. Position sensor according to Claim 10, **characterized in that** the individual resistors are separately mounted fixed resistors.

13. Position sensor according to Claim 10, **characterized in that** the individual resistors are separate layer resistors.

14. Position sensor according to one of the preceding claims 1 and 9, **characterized in that** the conductor tracks (3) are designed to have a lower resistance than the individual resistors of the resistance network (2).

15. Position sensor according to one of the preceding claims 1, 6, 7, or 10, **characterized in that** the resistance network (2) is trimmed to increase the accuracy.

16. Position sensor according to Claim 1, **characterized in that** the contact surfaces (4) arranged on the substrate (1) have a noble metal layer.

17. Position sensor according to one of Claims 1 or 16, **characterized in that** the substrate (1) consists of ceramic, silicon, glass, epoxy printed circuit board material or an electrically insulating metal substrate.

18. Position sensor according to Claim 1, **characterized in that** the contact spring structure (8) comprises separate contact springs (18).

19. Position sensor according to Claim 1, **characterized in that** the contact spring structure (8) is a single-piece bending beam structure.

20. Position sensor according to Claim 18 or 19, **characterized in that** the contact spring structure (8) consists of soft magnetic material.

21. Position sensor according to Claim 18 or 19, **characterized in that** the contact spring structure (8) consists of non-magnetic material which is provided with at least one magnetic layer.

22. Position sensor according to Claim 18, 19, 20 or 21, **characterized in that** the contact spring structure (8) is provided with a noble metal layer, at least on its electrical contact surfaces.

23. Position sensor according to one of Claims 18 to 22, **characterized in that** at least two contact springs (9) of the contact spring structure (8) are actuated simultaneously by the magnet device (11).

24. Position sensor according to one of the preceding claims, **characterized in that** the contact spring structure (8) and the substrate (1) are produced from the same material.

25. Position sensor according to one of the preceding claims 1, 16 or 17, **characterized in that** the insulating substrate (1) serves at the same time as a housing wall, which is closed by a housing cover (12).

26. Position sensor according to Claim 25, **characterized in that** the substrate (1) and the housing cover (12) consist of material with the same or similar coefficients of thermal expansion.

27. Position sensor according to Claim 25 or 26, **characterized in that** the housing cover (12) and the substrate (1) are soldered, welded or adhesively bonded in a sealed manner.

28. Position sensor according to Claim 24, **characterized in that** the substrate (1) and the contact spring structure (8) consists of semiconductor material.

29. Position sensor according to Claim 28, **characterized in that** the substrate (1) and the contact spring structure (8) are encapsulated in a sealed manner in a plastic housing.

30. Position sensor according to Claim 1, **characterized in that** the magnet device (11) is prestressed against the outer side of the housing (1, 12), so that it can be moved while making light contact.

31. Position sensor according to Claim 30, **characterized in that** the prestress is produced by a spring element (14) which at the same time serves to hold the magnet device (11).

32. Position sensor according to Claim 1, **characterized in that** at least one electrical terminal (5) of the resistance network (2) and an electrical terminal (10) of the contact spring structure (8) are led to the outside in a sealed manner.

## Revendications

1. Détecteur de position passif, constitué d'un substrat (1) comportant un réseau de résistance (2, 3, 4) déposé sur ce substrat et d'une structure de contact (8, 9) qui est associée au réseau de résistance et qui peut faire l'objet d'un changement de position sous l'action d'un dispositif à aimant (11), tandis qu'est assurée entre le réseau de résistance et la structure de contact une liaison électrique qui dépend de la position du dispositif à aimant, la structure de contact étant réalisée sous forme d'une structure de ressort de contact qui est enfermée dans un boîtier (1, 12) et le dispositif à aimant pouvant être déplacé à l'extérieur du boîtier, un signal de sortie (U_{AUS}) étagé pouvant être prélevé sur la structure de ressort de contact en fonction de la position du dispositif à aimant, **caractérisé en ce que** les noeuds du réseau de résistance (2) sont reliés à des surfaces de contact (4) également déposées sur le substrat (1), la structure de ressort de contact (8) étant disposée à une distance constante vis-à-vis des surfaces de contact (4) qui viennent en contact avec la structure de ressort de contact (8) en cours d'utilisation sous l'action du dispositif à aimant (11), et au moins les surfaces de contact (4) et la structure de ressort de contact (8) étant enfermées dans le boîtier (1, 12) étanche et le signal de sortie étagé pouvant être prélevé sur la structure de ressort de contact (8) uniquement du fait de la venue en contact de celle-ci avec les surfaces de contact (4) du réseau de résistance (2).

2. Détecteur de position suivant la revendication 1, **caractérisé en ce que** des pistes conductrices (3) sont disposées sur le substrat (1) à des distances préfixées et l'extrémité de chaque piste conductrice (3) constitue la surface de contact (4).

3. Détecteur de position suivant la revendication 1 ou 2, **caractérisé en ce que** le réseau de résistance (2) est réalisé sous forme de piste de résistance en forme de couche.

4. Détecteur de position suivant la revendication 3, **caractérisé en ce que** la piste de résistance (2) présente une structure de forme sinueuse.

5. Détecteur de position suivant la revendication 4, **caractérisé en ce que** les surfaces de contact (4) se raccordent directement à la structure de forme sinueuse.

6. Détecteur de position suivant l'une des revendications précédentes 3 et 4, **caractérisé en ce que** la piste de résistance (2) est réalisée suivant une technique en couche mince.

7. Détecteur de position suivant l'une des revendications précédentes 3 et 4, **caractérisé en ce que** la piste de résistance (2) est réalisée suivant une technique en couche épaisse.

8. Détecteur de position suivant l'une des revendications 2 à 7, **caractérisé en ce que** les pistes conductrices (3) sont disposées, à des distances préfixées, en totalité ou en partie sur la piste de résistance (2).

9. Détecteur de position suivant l'une des revendications 2 à 7, **caractérisé en ce que** les pistes conductrices (3) sont recouvertes en partie par la piste de résistance (2) et l'extrémité de chaque piste conductrice (3) constitue la surface de contact (4).

10. Détecteur de position suivant la revendication 1, **caractérisé en ce que** le réseau de résistance (2) est constitué de résistances individuelles séparées.

11. Détecteur de position suivant la revendication 10, **caractérisé en ce que** les résistances individuelles sont en un matériau semi-conducteur dopé.

12. Détecteur de position suivant la revendication 10, **caractérisé en ce que** les résistances individuelles sont des résistances fixes montées séparément.

13. Détecteur de position suivant la revendication 10, **caractérisé en ce que** les résistances individuelles sont des résistances en couche séparées.

14. Détecteur de position suivant l'une des revendications précédentes 1 et 9, **caractérisé en ce que** les pistes conductrices (3) sont réalisées avec une valeur ohmique plus faible que les résistances individuelles du réseau de résistance (2).

15. Détecteur de position suivant l'une des revendications précédentes 1, 6, 7 ou 10, **caractérisé en ce que** le réseau de résistance (2) fait l'objet d'unréglage fin en vue d'accroître la précision.

16. Détecteur de position suivant la revendication 1, **caractérisé en ce que** les surfaces de contact (4) disposées sur le substrat (1) comportent une couche de métal précieux.

17. Détecteur de position suivant l'une des revendications 1 ou 16, **caractérisé en ce que** le substrat (1) est en céramique, silicium, verre, matériau de plaquette conductrice époxyde ou un substrat métallique isolant électrique.

18. Détecteur de position suivant la revendication 1, **caractérisé en ce que** la structure de ressort de contact (8) est constituée de ressorts de contact (18) séparés.

19. Détecteur de position suivant la revendication 1, **caractérisé en ce que** la structure de ressort de contact (8) est une structure de barres de flexion d'une seule pièce.

20. Détecteur de position suivant la revendication 18 ou 19, **caractérisé en ce que** la structure de ressort de contact (8) est en un matériau à coercivité magnétique basse.

21. Détecteur de position suivant la revendication 18 ou 19, **caractérisé en ce que** la structure de ressort de contact (8) est en un matériau non magnétique qui est pourvu d'au moins une couche magnétique.

22. Détecteur de position suivant la revendication 18, 19, 20 ou 21, **caractérisé en ce que** la structure de ressort de contact (8) est pourvue, au moins sur ses surfaces de contact électrique, d'une couche de métal précieux.

23. Détecteur de position suivant l'une des revendications 18 à 22, **caractérisé en ce qu'**au moins deux ressorts de contact (9) de la structure de ressort de contact (8) sont actionnés simultanément par le dispositif à aimant (11).

24. Détecteur de position suivant l'une des revendications précédentes, **caractérisé en ce que** la structure de ressort de contact (8) et le substrat (1) sont réalisés dans un matériau identique.

25. Détecteur de position suivant l'une des revendications précédentes 1, 16 ou 17, **caractérisé en ce que** le substrat (1) isolant sert en même temps de paroi de boîtier, laquelle est fermée par un couvercle de boîtier (12).

26. Détecteur de position suivant la revendication 25, **caractérisé en ce que** le substrat (1) et le couvercle de boîtier (12) sont en des matières ayant des coefficients de dilatation thermique identiques ou analogues.

27. Détecteur de position suivant la revendication 25 ou 26, **caractérisée en ce que** le couvercle de boîtier (12) et le substrat (1) sont brasés, soudés ou collés d'une manière étanche.

28. Détecteur de position suivant la revendication 24, **caractérisé en ce que** le substrat (1) et la structure de ressort de contact (8) sont en un matériau semi-conducteur.

29. Détecteur de position suivant la revendication 28, **caractérisée en ce que** le substrat (1) et la structure de ressort de contact (8) sont encapsulés dans un boîtier en matière plastique d'une manière étanche.

30. Détecteur de position suivant la revendication 1, **caractérisé en ce que** le dispositif à aimant(11) est soumis à une précontrainte en regard de la face extérieure du boîtier (1, 12), de sorte qu'il peut être déplacé en étant légèrement en contact.

31. Détecteur de position suivant la revendication 30, **caractérisé en ce que** la précontrainte est produite par un élément formant ressort (14), lequel sert en même temps à recevoir le dispositif à aimant (11).

32. Détecteur de position de suivant la revendication 1, **caractérisé en ce qu'**au moins une borne électrique (5) du réseau de résistance (2) et une borne électrique (10) de la structure de ressort de contact (8) passent vers extérieur en faisant l'objet d'une étanchéité.
